# EUROPEAN PATENT SPECIFICATION

(11) **EP 0 630 195 B1**
(45) Date of publication and mention of the grant of the patent: **01.09.1999**
(21) Application number: 93906283.2
(22) Date of filing: 17.02.1993
(51) Int. Cl.: A43B 13/38, A43B 17/14, C08J 9/32

(54) **MOLDABLE FOAM WITH REVERSIBLE ENHANCED THERMAL STORAGE PROPERTIES**
FORMBARER SCHAUMSTOFF MIT REVERSIBLEN WARMESPEICHERUNGSEIGENSCHAFTEN
MOUSSE MOULABLE A CAPACITE D'ISOLATION THERMIQUE ACCRUE AVEC REVERSIBILITE

(30) Priority: 18.02.1992 US 837762
(43) Date of publication of application: 28.12.1994
(73) Proprietor: Delta Thermal Systems, Inc., Cary, North Carolina 27513 (US)
(72) Inventor: Bryant, Yvonne G., Raleigh, North Carolina 27610 (US); COLVIN, David, P., Cary, North Carolina 27513 (US)
(74) Representative: Warren, Anthony Robert
(86) International application number: US9301881
(87) International publication number: WO9315625

(56) References cited:
- EP-A- 0 072 364
- EP-A- 0 369 800
- DE-U- 8 804 748
- US-A- 1 586 546
- US-A- 2 641 068
- US-A- 4 016 326
- US-A- 4 055 699
- US-A- 4 249 319
- US-A- 4 331 731
- US-A- 4 572 864
- US-A- 4 592 950
- US-A- 4 658 515
- US-A- 4 703 754
- US-A- 4 756 958
- US-A- 4 887 368

## Description

This invention relates generally to the field of thermal control materials intended to be positioned between a heat source and a heat sink, and more particularly to insulation materials for use in clothing, for example, shoe soles/insoles.

The rate of a person's thermal exchange with the environment is dependent upon a number of factors, such as activity level, the nature and condition of the environment, and the characteristics of the clothing having contact with the wearer's skin. The transfer of body heat from the skin through clothing or footwear to the environment takes place by conduction, convection, radiation and evaporation, the physiological details and mechanisms of which are generally well known.

In footwear, conduction or convection from the foot through the shoe to the environment is the main mode of heat loss from the foot to the outer surface of a shoe or boot. Thermal energy is principally transferred by conduction through the footwear, and is thereafter transferred by conduction or convection as well as radiation from the sole to the environment.

Given the propensity for the extremities and particularly the feet to easily become cold, it is logical for efforts to have been made to improve the insulating capacity of shoe soles and/or insoles. U.S. Patent No. 4,658,515 to Oatman entitled "Heat Insulating Insert For Footwear" discloses a heat retention insole for shoes comprising a laminated structure incorporating a flexible plastic bottom sheet, a similar plastic upper sheet, and a spacer sheet formed primarily of a foamed organic plastic material. The spacer sheet includes large area apertures defined by bars extending transversely between portions of a parametrial band portion. These large area apertures are loosely filled with particles of insulating plastic materials (such as hollow polystyrene or polyethylene beads) which also serve to maintain the top and bottom sheets in a spaced relationship even when subjected to foot pressure. The outer surfaces of the insole are preferably provided with a heat reflecting coating or film to minimize the loss of heat from the foot by radiation and reflect any such radiated heat back in to the foot of the wearer. While somewhat effective, this insole relies on trapped air within cellular spaces to retard the flow of heat. Compression of the insulating material reduces the volume of the trapped air space which, in turn, increases thermal conductivity and increases the rate of heat loss through the footwear.

Another example of an insulating insole is disclosed in U.S. Patent No. 4,055,699 to Hsiung which teaches a multilayer insole that is adapted for insertion into an article of footwear to insulate the foot from the cold developed in the sole and sock lining, from walking on a cold surface, the insole being thin enough to fit within the footwear without requiring an increase in footwear size. The insole comprises four layers, including from top to bottom, a top layer of soft fabric for comfortable contact with the plantar surface of the foot or sock of the wearer, a second layer of thermoplastic foam cushioning material, a third layer which is more effective than the remaining layers in insulating the foot against cold, and a fourth layer that is an aluminized polymeric material of paper thinness. Again, compression reduces efficacy.

U.S. Patent No. 4,887,368 to Latzke also discloses a multi-layer insole, including a metal layer interposed between a foamed polyethylene layers, which is intended both to store and distribute heat.

Still another attempt at maintaining the warmth of the foot is found in U.S. Patent No. 4,331,731 to Seike et al. which discloses an exothermic body for use as a shoe insole. The insole includes a foamed plastic sheet having cells therein and an exothermic agent such as a mixture of iron, saline solution, activated carbon and, woodmeal or pulp powder. The foamed sheet is covered by an air-permeable, thin film such as a thick perforated plastic film. A cushion material is provided on at least one surface of the foamed plastic sheet covered with the air-permeable thin film and the, foamed plastic sheet together with the cushion material are covered by an air permeable film cover. This device is not rechargeable and is, therefore, an expensive and temporary solution to the problem.

U.S. Patent No. 4,756,958 to Bryant et al discloses a fabric formed from fibres possessing reversible enhanced thermal storage properties. The fibres are formed from a polymeric material and incorporate embedded microcapsules containing temperature stabilizing means comprising a phase-change material or plastic crystals.

It is an object of the present invention to provide a thermal control material possessing enhanced thermal storage properties, suitable for fabricating, for example, a shoe insole having an enhanced ability to insulate the foot from hot or cold.

The present invention is directed to a thermal control material of the general type disclosed in US Patent No. 4,887,368 as defined in the precharacterising clause of claim 1.

According to one aspect of the present invention, there is provided a thermal control material as defined in the characterising clause of claim 1.

The thermal control material embodying the present invention may be used to fabricate a shoe insole that is compatible with existing footwear and which may be thin enough to be used without the necessity of the user purchasing footwear larger than that normally worn. The insole has a high degree of structural integrity, is reusable, and has limited compressibility which therefore enhances thermal management of the foot.

In one embodiment, the present invention is applied to an insole adapted to be removably positioned within an article of footwear to insulate the foot from heat or cold and provide auxiliary heat from stored energy. The insole includes a base material which comprises a flexible resilient moldable foamed plastics sheet or layer forming a pad. A plurality of microcapaules are integral with and dispersed throughout at least a portion of the base material and contain a temperature stabilizing means, such as a phase-change material, for example, paraffinic hydrocarbons. Furthermore, the insole may include an anisotropic distribution of microcapsules such that they are concentrated closer to the plantar region of the foot. Alternatively, the insole may be multilayered, with the upper layer containing microcapsules and the lower layer comprising a microcapsule free insulator.

Reference will now be made to the accompanying drawings, in which:-
Figure 1 is a cross section of a microcapsule containing a phase-change material for use in a thermal control material embodying the present invention;
Figure 2 is a perspective view of an insole embodying the present invention;
Figure 3 is a sectional view of the insole taken along line 3-3 of Figure 2; and
Figure 4 is a sectional view, similar to that taken along line 3-3 of Figure 2, of a second embodiment of the insole according to the present invention.

The insole generally indicated at 10 is adapted to be removably positioned within an article of footwear (not shown) to insulate the foot from heat or cold, and includes a base material which comprises a flexible resilient moldable foamed plastics sheet or layer forming a pad. A plurality of microcapsules 20 are integral with, and dispersed throughout, the base material. The microcapsules contain a temperature stabilizing means 30.

The base material forming the pad is a foamed polymeric material such as a foamed organic plastic 40. Exemplary of acceptable polymers employed in the footwear industry are polyurethane, ethylene/vinyl acetate (EVA) copolymer, latex, polyethylene, polypropylene, butyl, silicone, cellulose acetate, neoprene, epoxy, polystyrene, phenolic, and polyvinyl chloride (PVC).

The microcapsules 20 can range in size from about 1.0 to about 1000.0 microns and are formed according to conventional methods well known to those skilled in the art.

The microcapsules contain a temperature stabilizing means or phase change material 30 such as eicosane. Additionally, plastic crystals such as 2,2-dimethyl-1,3-propanediol (DMP) and 2-hydroxymethyl-2-methyl-1,3-propanediol (HMP) and the like may be used as the temperature stabilizing means. When plastic crystals absorb thermal energy, the molecular structure is temporarily modified without changing the phase of the material. In another aspect of the invention, the composition of the phase change material may be modified to obtain optimum thermal properties for a given temperature range. For example, the melting point of a homologous series of paraffinic hydrocarbons is directly related to the number of carbon atoms as shown in the following table:

| Compound Name | Number of Carbon Atoms | Melting Point Degrees Centigrade |
|---|---|---|
| n-Octacosane | 28 | 61.4 |
| n-Heptacosane | 27 | 59.0 |
| n-Hexacosane | 26 | 56.4 |
| n-Pentacosane | 25 | 53.7 |
| n-Tetracosane | 24 | 50.9 |
| n-Tricosane | 23 | 47.6 |
| n-Docosane | 22 | 44.4 |
| n-Heneicosane | 21 | 40.5 |
| n-Eicosane | 20 | 36.8 |
| n-Nonadecane | 19 | 32.1 |
| n-Octadecane | 18 | 28.2 |
| n-Heptadecane | 17 | 22.0 |
| n-Hexadecane | 16 | 18.2 |
| n-Pentadecane | 15 | 10.0 |
| n-Tetradecane | 14 | 5.9 |
| n-Tridecane | 13 | -5.5 |

Each of the above materials can be separately encapsulated and is most effective near the melting point indicated. It will be seen from the foregoing that the effective temperature range of the insole can, therefore, be tailored to a specific environment by selecting the phase change materials required for the corresponding temperature and adding microcapsules containing the material to the insole.

In addition, the insole 10 can be designed to have enhanced thermal characteristics over a wide range of temperature or at discrete temperature ranges through proper selection of phase change material.

In fabricating the insole 10, the desired encapsulated phase change materials are added to the base polymer (liquid or solution) and fabrication is accomplished according to conventional methods which include foaming. Typical concentrations of microencapsulated phase change particles added to the base polymer material range from about 20% to about 60% by weight. The foregoing concentrations are believed to allow the insole to be subjected to the repeated mechanical stresses of ambulation with minimum changes in the thermal characteristics of the insole.

In the fabrication of the invention, the microcapsules 20 need not be evenly distributed throughout the entire insole. For example, the microcapsules 20 may be anisotropically distributed so as to concentrate them in the upper portion of the insole in a plane substantially parallel to the underside of the plantar region of the foot. It is believed that the loading or concentration of the particles in the insole would decrease from an initially selected concentration (top being nearest the foot) by one- half as one moves by quartiles away from the top as follows:

| | |
|---|---|
| First quarter of insole | 100%(top) |
| Second quarter of insole | 50% |
| Third quarter of insole | 25% |
| Fourth quarter of insole | 0% (bottom) |

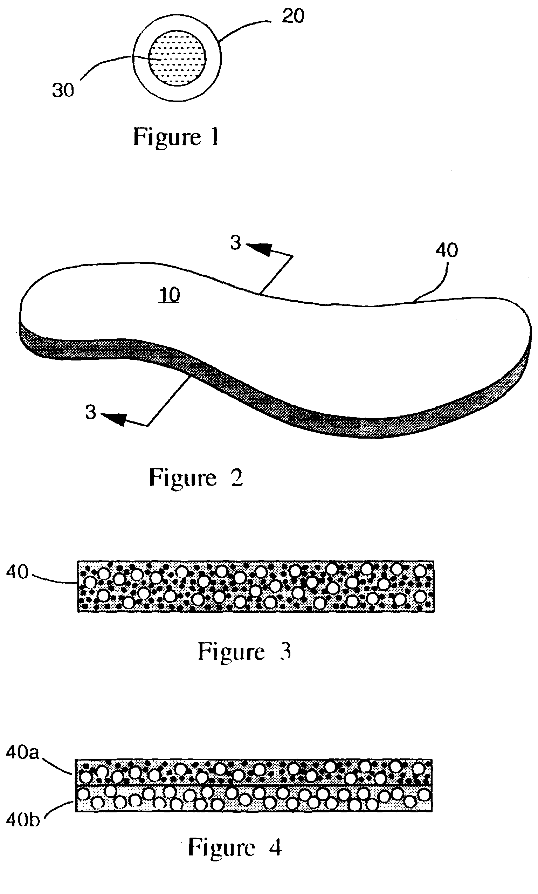

Similarly, the insole may be fabricated in two or more layers 40a,40b as shown in fig. 4, only one of which contains microcapsules. These layers are then bonded together using conventional methods with the net result being a concentration of microcapsules 20 proximate the foot embedded in the base material. The various layers 40a,40b may be of the same or different materials, depending on the particular application. Alternatively, both layers may contain microcapsules to form an additional thermal barrier.

It will be appreciated that the insole according to the invention will have enhanced value if produced to have application in heat as well as cold. For example, the insole 10 could be inserted into footwear which would be cold during winter and hot during summer. Furthermore, a single phase change material (PCM) can be employed to both heat and cool a shoe. For example, an insole having a PCM selected to melt at higher temperatures can be thermally charged simply by being present in a room or proximate a heating duct. Thereafter, when in use in a cold environment such as ice or snow, the foot of the user will remain warm until the phase change material solidifies. Similarly, in summer, when the same insole is stored in a relatively cool environment, such as a home or office and is then used, for example, on a hot asphalt roadway, the foot will remain cool until the phase change material melts. Additionally, the insole could be fabricated with microcapsules containing two discrete types of phase change material, one suitable for assisting maintaining the foot of the wearer at each of two desired temperatures.

The insole may be used as a thermal storage device, somewhat similar to a battery. In operation, the user may preheat (or pre-cool) the insole prior to insertion within the article of footwear. Alternatively, the preheating or pre-cooling as the case may be, may be accomplished simply by returning inside after having been out of doors (for example, in the snow when the microcapsules will be recharged from the warm air present inside) or recharged by metabolic heat production during high activity levels.

While the foregoing description makes reference to a shoe insole, the reader will note that the present invention has wide application not only in other areas of the shoe but in many related items of clothing or padding. The present invention contemplates fabrication of the shoe sole from a foam pad produced according to conventional means. Therefore, one method of producing the insoles is in the form of a large flat sheet. The sheet then passes through a punch press which cuts out individual insoles. The reader will note that the sheet may be used as linings in gloves, hats, outerwear, and underwear and the present invention may, therefore, be regarded generally as a thermal barrier.

In addition to the uses specified above, the reader will appreciate that the thermal barrier could have additional uses in its sheet form. For example, certain products such as pharmaceuticals must be maintained at or above minimum temperatures. This is often a difficult undertaking when transportation is required. Therefore, the present invention will find application as a thermal "blanket". The blanket is charged by melting the phase change materials within the microcapsules and may then be wrapped around the product to maintain the termination thereof.

The foregoing embodiments and examples are to be considered illustrative, rather than restrictive of the invention, and those modifications which come within the meaning and range of equivalence of the claims are to be included therein.

## Claims

1. A thermal control material having thermal energy storage and insulative properties for use as a thermal barrier between a heat source and a heat sink, and comprising:
a flexible, resilient base material, characterised by ;
a plurality of microcapsules (20) integral with and dispersed throughout at least a portion of said base material, said microcapsules being surroundingly encapsulated and embedded within said base material, and substantially all of said microcapsules being spaced apart from each other, the space between neighbouring adjacent microcapsules comprising base material, said microcapsules (20) containing temperature stabilizing means (30) comprising a phase change material or a plastic crystal material in which a change will occur at a preselected temperature, or within a preselected temperature range, at which it is desired to maintain the thermal control material in use;
whereby the thermal control material possesses reversible enhanced thermal storage properties and assists in maintaining a thermal gradient between the heat source and the heat sink;
whereby said base material comprises a non-fibrous molded sheet of foamed base material forming an insulative pad (40).

2. A thermal control material according to claim 1, which is formed as an insole adapted to be positioned within an article of footwear to insulate the foot from heat or cold.

3. A thermal control material according to claim 2, wherein said microcapsules (20) are leak-resistant, whereby the insole (40) may be subjected to the repeated external stresses of ambulation with minimum changes in the thermal characteristics of the insole.

4. A thermal control material according to claim 2 or 3, wherein a portion of said microcapsules (20) contain a first temperature stabilizing means (30) for maintaining the warmth of the foot, and others of said microcapsules contain a second temperature stabilizing means (30) for cooling of the foot.

5. A thermal control material according to any of claims 2 to 4, wherein said microcapsules (20) are anisotropically distributed within said insole.

6. A thermal control material according to claim 5, wherein said anisotropic distribution concentrates said microcapsules (20) in the upper portion of said insole and in a plane substantially parallel to the underside of the plantar portion of the foot.

7. A thermal control material according to any preceding claim, wherein said temperature stabilizing material (30) comprises a phase-change material including one or more of the following paraffinic hydrocarbons, namely n-Octacosane, n-Heptacosane, n-Hexacosane, n-Pentacosane, n-Tetracosane, n-Tricosane, n-Docosane, n-Heneicosane, n-Eicosane, n-Nonadecane, n-Octadecane, n-Heptadecane, n-Hexadecane, n-Pentadecane, n-Tetradecane, and n-Tridecane.

8. A thermal control material according to any of claims 1 to 6, wherein said temperature stabilizing means (30) comprises a plastic crystal material including one or both of the following, namely 2,2-dimethyl-1,3-propanediol (DMP) and 2-hydroxymethyl-2-methyl-1,3-propanediol (HMP).

9. A thermal control material according to any preceding claim, wherein said microcapsules (20) range in diameter from about 1.0 micron to about 1000 microns.

10. A thermal control material according to any preceding claim, wherein said base material is a polymer.

11. A thermal control material according to any preceding claim, wherein the foamed base material is open-cell.

12. A thermal control material according to any of claims 1 to 10, wherein the foamed base material is closed-cell.

13. A thermal control material according to any preceding claim, wherein said pad (40) comprises at least two longitudinal planar layers (40a, 40b).

14. A thermal control material according to claim 13, wherein the longitudinal planar layer (40a) proximate the heat source contains said microcapsules (20).

15. A method of protecting the foot from the deleterious effects of prolonged exposure to cold, and comprising the steps of:
(a) thermally charging a flexible resilient insole (40) of the type claimed in claim 2, or in claim 2 in combination with any of claims 3 to 14, to a temperature where the temperature stabilizing means (30) undergoes a change; and
(b) inserting the thermally charged insole into an article of footwear immediately prior to use, whereby the insole forms an additional barrier between the foot and the external environment.

16. The method according to claim 15, wherein said microcapsules (20) are anisotropically distributed so that they are concentrated in the upper portion of the thermal blanket in a plane substantially parallel to the foot.

17. A method of stabilizing the temperature of an item comprising the steps of:
(a) thermally charging a flexible resilient thermal blanket of a thermal control material of the type claimed in claim 1, or in claim 1 in combination with any of claims 7 to 14, to a temperature where the temperature stabilizing means (30) undergoes a change; and
(b) covering the item with the thermally charged blanket, whereby the blanket forms a barrier between the item and the external environment and extended thermal protection of the item is provided thereto.

## Patentansprüche

1. Ein Material zur Wärmeregulierung, welches Eigenschaften zur thermischen Energiespeicherung und Isolierung zum Gebrauch als thermische Barriere zwischen einer Wärmequelle und einer Wärmesenke besitzt, wobei dieses Material folgendes beinhaltet:
ein flexibles, elastisches Basismaterial, **dadurch gekennzeichnet**, daß
eine Vielzahl von Mikrokapseln (20), welche eine Einheit mit mindestens einem Teil des Basismaterials bildet, und die Mikrokapseln (20) durch das Basismaterial verteilt sind und die Mikrokapseln (20) umgehend eingehüllt und eingebettet innerhalb dieses Basismaterials sind und im wesentlichen alle der Mikrokapseln voneinander beabstandet sind, und der Raum zwischen den benachbarten und gegenüberliegenden Mikrokapseln das Basismaterial beinhaltet und die Mikrokapseln (20) eine Temperatur-Regeleinrichtung (30) beinhaltet, welche Temperatur-Regeleinrichtung ein Phasenwechselmaterial oder ein verformbares Kristallmaterial beinhaltet, in welchem ein Phasenwechsel bei einer vorgegebenen Temperatur oder innerhalb eines vorgegebenen Temperaturbereichs auftritt, wo es gewünscht ist, das Material zur Wärmeregulierung in Gebrauch zu halten;
wobei das Material zur Wärmeregulierung umkehrbare, erhöhte Wärmespeicher-Eigenschaften besitzt und hilft, den Temperaturgradient zwischen der Wärmequelle und der Wärmesenke beizubehalten;
wobei das Basismaterial einen nicht-faserig geformten Bogen geschäumten Basismaterials beinhaltet und so ein Isolationspolster (40) formt.

2. Ein Material zur Wärmeregulierung nach Anspruch 1, welches als Einlegesohle geformt ist und angepasst ist zum Einlegen in einen Schuhartikel, um den Fuß vor Hitze oder Kälte zu isolieren.

3. Ein Material zur Wärmeregulierung nach Anspruch 2, worin die Mikrokapseln (20) auslaufsicher sind und wobei die Einlegesohle (40) einer wiederholten externen Gehbelastung ausgesetzt werden kann mit geringen Änderungen in der Wärme-Charakteristik der Einlegesohle.

4. Ein Material zur Wärmeregulierung nach Anspruch 2 oder 3, worin ein Teil der Mikrokapseln (20) eine erste Temperatur-Regeleinrichtung (30) zum Beibehalten der Wärme des Fußes besitzt und andere Mikrokapseln, welche eine zweite Temperatur-Regeleinrichtung (30) zum Kühlen des Fußes besitzt.

5. Ein Material zur Wärmeregulierung nach einem der Ansprüche 2 bis 4, worin die Mikrokapseln (20) anisotropisch verteilt sind innerhalb der Einlegesohle.

6. Ein Material zur Wärmeregulierung nach Anspruch 5, worin die anisotropische Verteilung die Mikrokapseln (20) im oberen Teil der Einlegesohle und in einer Ebene, im wesentlichen parallel zur Unterseite des ebenen Teils des Fußes, konzentriert ist.

7. Ein Material zur Wärmeregulierung nach einem der vorhergehenden Ansprüche, worin die Temperatur-Regeleinrichtung (30) ein Phasen-Wechselmaterial besitzt, welches eine oder mehrere der folgenden Paraffin-Hydrocarbone einschließt, nämlich n-Octacosan, n-Heptacosan, n-Hexacosan, n-Pentacosan, n-Tetracosan, n-Tricosan, n-Docosan, n-Heneicosan, n-Eicosan, n-Nonadecan, n-Octadecan, n-Heptadecan, n-Hexadecan, n-Pentadecan, n-Tetradecan und n-Tridecan.

8. Ein Material zur Wärmeregulierung nach einem der Ansprüche 1 bis 6, worin die Temperatur-Regeleinrichtung (30) ein verformbares Kristallmaterial beinhaltet, welches eine oder beide der folgenden Materialien beinhaltet, nämlich 2,2-Dimethyl-1, 3-Propandiol (DMP) and 2-Hydroxymethyl-2-Methyl-1, 3-Propandiol (HMP).

9. Ein Material zur Wärmeregulierung nach einem der vorhergehenden Ansprüche, worin die Mikrokapseln (20) einen Durchmesserbereich von ungefähr 1,0 bis ungefähr 1000 Mikron besitzen.

10. Ein Material zur Wärmeregulierung nach einem der vorhergehenden Ansprüche, worin das Basismaterial ein Polymer ist.

11. Ein Material zur Wärmeregulierung nach einem der vorhergehenden Ansprüche, worin das geschäumte Basismaterial offene Zellen besitzt.

12. Ein Material zur Wärmeregulierung nach einem der Ansprüche 1 bis 10, worin das geschäumte Basismaterial geschlossene Zellen besitzt.

13. Ein Material zur Wärmeregulierung nach einem der vorhergehenden Ansprüche, worin das Polster (40) mindestens zwei ebene Längsschichten (40a, 40b) besitzt.

14. Ein Material zur Wärmeregulierung nach Anspruch 13, worin die ebene Längsschicht (40a), welche näher an der Wärmequelle ist, die Mikrokapseln (20) beinhaltet.

15. Ein Verfahren zum Schutz des Fußes vor nachteiligen Effekten bei längerer Kälteeinwirkung, welches folgende Schritte beinhaltet:
(a) Wärmeaufladung der flexiblen, elastischen Einlegesohle (40) von der Art nach Anspruch 2, oder nach Anspruch 2 in Kombination mit einem der Ansprüche 3 bis 14, bis zu einer Temperatur, wo die Temperaturregeleinrichtung (30) einem Phasenwechsel unterzogen wird; und
(b) Einlegen der thermisch aufgeladenen Einlegesohle in einen Schuhartikel direkt vor der Benutzung, wobei die Einlegesohle eine zusätzliche Barriere zwischen dem Fuß und der externen Umgebung bildet.

16. Ein Verfahren nach Anspruch 15, worin die Mikrokapseln (20) anisotropisch verteilt sind, so daß diese im oberen Teil der thermischen Decke konzentriert sind innerhalb einer Ebene, welche im wesentlichen parallel zum Fuß liegt.

17. Ein Verfahren zum Regeln der Temperatur eines Gegenstandes, welches Verfahren folgende Schritte beinhaltet:
(a) thermisches Aufladen einer flexiblen, elastischen thermischen Decke eines Materials zur Wärmeregulierung von der Art nach Anspruch 1, oder nach Anspruch 1 in Kombination mit einem der Ansprüche 7 bis 14, bis zu einer Temperatur, wo die Temperatur-Regeleinrichtung (30) einem Phasenwechsel unterzogen wird; und
(b) Bedecken des Gegenstandes mit der thermisch aufgeladenen Decke, wobei die Decke eine Barriere zwischen den Gegenstand und der externen Umgebung bildet und damit der Gegenstand einen erhöhten thermischen Schutz erhält.

## Revendications

1. Matériau de régulation thermique ayant des propriétés d'isolation et de stockage d'énergie thermique pour être utilisé en tant que barrière thermique entre une source de chaleur et un puits thermique, et comprenant :
un matériau de base résilient flexible, caractérisé par :
une pluralité de micro-capsules (20) formant partie intégrante du et dispersées à travers au moins une partie dudit matériau de base, lesdites micro-capsules étant encapsulées et encastrées de manière entourée dans ledit matériau de base, et sensiblement toutes les micro-capsules étant espacées les unes des autres, l'espace entre des micro-capsules voisines adjacentes comprenant du matériau de base, lesdites micro-capsules (20) contenant des moyens de stabilisation de température (30) comprenant un matériau de changement de phase ou un matériau de cristal plastique dans lequel un changement se produira à une température présélectionnée, ou dans un domaine de température présélectionnée, auquel il est souhaité de maintenir le matériau de régulation thermique en utilisation ;
le matériau de régulation thermique possédant des propriétés de stockage thermique améliorées réversibles et aidant à maintenir un gradient thermique entre la source de chaleur et le puits thermique ;
ledit matériau de base comprenant une feuille moulée non fibreuse de matériau de base sous forme de mousse formant un tampon isolant (40).

2. Matériau de régulation thermique selon la revendication 1, qui est formé en tant que semelle intérieure adaptée à être positionnée dans une chaussure pour isoler le pied de la chaleur ou du froid.

3. Matériau de régulation thermique selon la revendication 2, dans lequel les micro-capsules (20) sont résistantes aux fuites, la semelle intérieure (40) pouvant être soumise à des contraintes externes répétées de déambulation avec des changements minimums dans les caractéristiques thermiques de la semelle intérieure.

4. Matériau de régulation thermique selon la revendication 2 ou 3, dans lequel une partie desdites microcapsules (20) contient des premiers moyens de stabilisation de température (30) pour maintenir la chaleur du pied, et d'autres desdites micro-capsules contiennent des seconds moyens de stabilisation de température (30) pour refroidir le pied.

5. Matériau de régulation thermique selon l'une quelconque des revendications 2 à 4, dans lequel lesdites micro-capsules (20) sont distribuées de manière anisotrope dans ladite semelle intérieure.

6. Matériau de régulation thermique selon la revendication 5, dans lequel ladite distribution anisotrope concentre lesdites micro-capsules (20) dans la partie supérieure de ladite semelle intérieure et dans un plan sensiblement parallèle au côté inférieur de la partie plantaire du pied.

7. Matériau de régulation thermique selon l'une quelconque des revendications précédentes, dans lequel ledit matériau de stabilisation de température (30) comprend un matériau de changement de phase comprenant l'une ou plusieurs des hydrocarbures paraffiniques suivantes, à savoir n-Octacosane, n-Heptacosane, n-Hexacosane, n-Pentacosane, n-Tetracosane, n-Tricosane, n-Docosane, n-Heneicosane, n-Eicosane, n-Nonadecane, n-Octadecane, n-Heptadecane, n-Hexadecane, n-Pentadecane, n-Tetradecane et n-Tridecane.

8. Matériau de régulation thermique selon l'une quelconque des revendications 1 à 6, dans lequel lesdits moyens de stabilisation de température (30) comprennent un matériau de cristal plastique comprenant l'un ou les deux des matériaux suivants, à savoir 2,2-dimethyl-1,3-propanediol (DMP) et 2-hydroxymethyl-2-methyl-1,3-propanediol (HMP).

9. Matériau de régulation thermique selon l'une quelconque des revendications précédentes, dans lequel lesdites micro-capsules (20) ont un diamètre situé dans le domaine allant d'environ 1,0 micron à environ 1 000 microns.

10. Matériau de régulation thermique selon l'une quelconque des revendications précédentes, dans lequel ledit matériau de base est un polymère.

11. Matériau de régulation thermique selon l'une quelconque des revendications précédentes, dans lequel le matériau de base sous forme de mousse est à alvéole ouverte.

12. Matériau de régulation thermique selon l'une quelconque des revendications 1 à 10, dans lequel ledit matériau de base sous forme de mousse est à alvéole fermée.

13. Matériau de régulation thermique selon l'une quelconque des revendications précédentes, dans lequel ledit tampon (40) comprend au moins deux couches planaires longitudinales (40a, 40b).

14. Matériau de régulation thermique selon la revendication 13, dans lequel la couche planaire longitudinale (40a) à proximité de la source de chaleur contient lesdites micro-capsules (20).

15. Procédé pour protéger le pied des effets nuisibles d'une exposition prolongée au froid et comprennent les étapes de :
(a) charger thermiquement une semelle intérieure résiliente flexible (40) selon la revendication 2 ou selon la revendication 2 en combinaison avec l'une quelconque des revendications 3 à 14, à une température à laquelle les moyens de stabilisation de température (30) subissent un changement ; et
(b) insérer la semelle intérieure chargée thermiquement dans une chaussure immédiatement avant l'utilisation, la semelle intérieure formant une barrière additionnelle entre le pied et l'environnement externe.

16. Procédé selon la revendication 15, dans lequel les micro-capsules (20) sont distribuées de manière anisotrope de telle sorte qu'elles sont concentrées dans la partie supérieure du matelas isolant dans un plan sensiblement parallèle au pied.

17. Procédé pour stabiliser la température d'un objet comprenant les étapes de :
(a) charger thermiquement un matelas isolant résilient flexible réalisé en un matériau de régulation thermique selon la revendication 1, ou la revendication 1 en combinaison avec l'une quelconque des revendications 7 à 14, à une température à laquelle les moyens de stabilisation de température (30) subissent un changement ; et
(b) recouvrir l'objet avec le matelas chargé thermiquement, le matelas formant une barrière entre l'objet et l'environnement externe et une protection thermique étendue de l'objet est fournie à celui-ci.
